# EUROPÄISCHE PATENTANMELDUNG

(11) **EP 0 729 083 A1**
(43) Veröffentlichungstag der Anmeldung: **28.08.1996**
(21) Anmeldenummer: 96102075.7
(22) Anmeldetag: 13.02.1996
(51) Int. Cl.: G05D 3/14, F15B 9/07, G05B 11/50

(54) **Doppelwirkender elektropneumatischer Stellungsregler**

(30) Priorität: 24.02.1995 DE 19506469
(71) Anmelder: HONEYWELL AG, D-63067 Offenbach am Main (DE)
(72) Erfinder: Regel, Mathias, D-63584 Gründau (DE)
(74) Vertreter: Herzbach, Dieter, Dipl.-Ing.

(57) **Zusammenfassung**

Ein doppeltwirkender elektropneumatischer Stellungsregler für Membran- oder Kolbenantriebe (12) besteht aus einem einfach wirkenden E/P-Stellungsregler (10) und einem nachgeschalteten Druckinverter (14).

## Beschreibung

Die vorliegende Erfindung bezieht sich auf einen doppeltwirkenden elektropneumatischen Stellungsregler nach dem Gattungsbegriff des Patentanspruches 1.

Elektropneumatische Stellungsregler stellen die Verbindung zwischen elektrischen bzw. elektronischen Geräten und pneumatischen Stellantrieben her. Die als Eingangssignal anstehende Führungsgröße ist ein geringer eingeprägter Strom im mA-Bereich (4-20mA), während die Stellgröße als Ausgangssignal ein geregelter Luftdruck ist, der zur Betätigung pneumatischer Membran- oder Kolbenantriebe herangezogen wird.

Elektropneumatische Stellungsregler arbeiten im allgemeinen nach dem Kraftvergleichsprinzip. Dabei wird der von einem Regler oder Ansteuergerät abgegebene eingeprägte Strom mittels einer Tauchspule und eines Düse/Prallplattesystems bzw. über eine durch elektrische Ansteuerung auslenkbare Piezoplatte und eine damit zusammenwirkende Düse in ein zu dem elektrischen Signal proportionales pneumatisches Signal umgewandelt. Dieses pneumatische Signal dient nach entsprechender pneumatischer Verstärkung zur Ansteuerung des pneumatischen Antriebs.

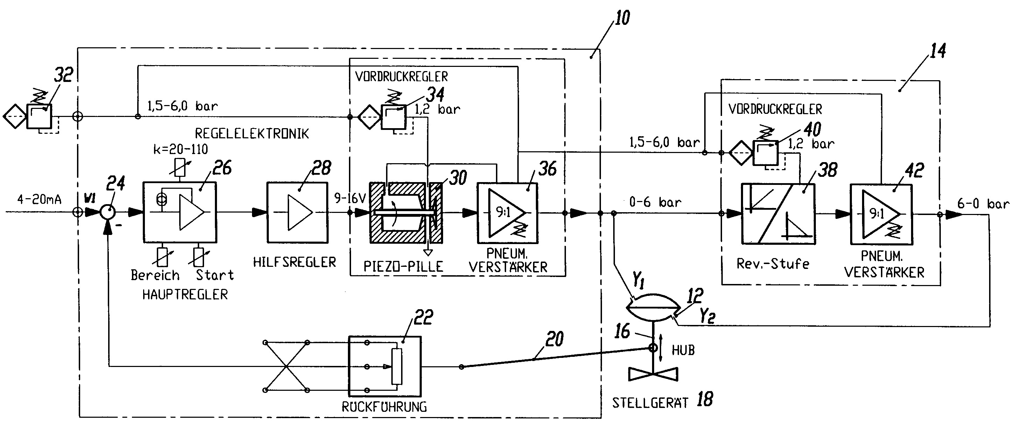

Hinsichtlich doppelwirkender elektropneumatischer Stellungsregler war es bislang üblich, ein Düse/Prallplattesystem vorzusehen, bei dem zwei Düsen mit einer Prallplatte zusammenarbeiteten. Beim Druckanstieg in einer Düse erfolgt ein entsprechender Druckabfall in der anderen Düse, welche Drücke über nachgeschaltete Verstärker auf den Antrieb gegeben werden. Ein derartiger pneumatischer Stellungsregler ist aus Figur 1 des DE-GM 75 38 863 bekannt. Bei Verwendung einer Piezo-Pille muß eine zweite invers angesteuerte Pille vorgesehen werden.

Als nachteilig ist neben den erhöhten Kosten bei der bekannten Anordnung anzusehen, daß eines der beiden Systeme immer einen hohen Luftverbrauch aufweisen wird und daß infolge von Bauelementtoleranzen das dynamische Verhalten unterschiedlich sein kann, so daß die Drücke in den gegenüberliegenden Kammern des Antriebs unter Umständen ein nicht streng gegenläufiges Verhalten aufweisen.

Es ist daher die Aufgabe der vorliegenden Erfindung, einen doppeltwirkenden elektropneumatischen Stellungsregler anzugeben, der bei geringen Kosten ein ideales Kennlinienverhalten aufweist. Die Lösung dieser Aufgabe gelingt gemäß den kennzeichnenden Merkmalen des Patentanspruches 1. Weitere vorteilhafte Ausgestaltungen des erfindungsgemäßen Stellungsreglers sind den abhängigen Ansprüchen entnehmbar.

Anhand der einzigen Figur der beiliegenden Zeichnung sei im folgenden ein Ausführungsbeispiel des erfindungsgemäßen doppeltwirkenden elektropneumatischen Stellungsreglers beschrieben. Gemäß dieser einzigen Figur ist ein handelsüblicher E/P-Stellungsregler 10 gezeigt, der mit seinem Ausgangsdruck y₁ auf die obere Kammer eines Membranantriebes 12 einwirkt. Der Ausgangsdruck y₁, der sich zwischen 0 und 6 bar bewegt, wird zusätzlich einem Druckinverter 14 zugeführt, der einen Ausgangsdruck y₂ in der Größenordnung von 6 bis 0 bar, d.h. gegenläufig zu dem Eingangsdruck y₁ erzeugt, wobei der Ausgangsdruck y₂ der unteren Kammer des Membranantriebs 12 zugeführt wird. Der Membranantrieb 12 betätigt über eine Ventilstange 16 den nicht-dargestellten Schließkolben eines Ventils 18.

Der Hub der Ventilstange 16 wird über ein Gestänge 20 abgegriffen und in die Verstellung enies Rückführpotentiometers 22 umgesetzt. Der somit in ein elektrisches Signal umgesetzte Ventilhub wird in einem Vergleichsglied 24 mit dem eingeprägten Strom der Führungsgröße (4-20mA) verglichen und die Differenz steuert über einen Hauptregler 26, an dem ein Startpunkt, der Bereich und ein Proportionalitätsfaktor einstellbar sind, und einen Hilfsregler 28 eine Piezo-Pille 30, die als E/P-Umformer arbeitet und das elektrische Regelabweichungssignal in ein pneumatisches Drucksignal umsetzt.

Hierbei wird ein Piezoblättchen in Abhängigkeit von der Größe des angelegten elektrischen Signales mehr oder weniger von einer mit einem geregelten Vordruck gespeisten Düse abgehoben, wobei gleichzeitig eine Abluftdüse immer mehr geschlossen wird, so daß der Druck am Ausgang der Piezo-Pille 30 ansteigt.

Versorgungsluft mit einem Druck zwischen 1,4 und 6,0 bar wird über einen Luftfilter 32 dem E/P-Stellungsregler 10 zugeführt und über einen in dem Stellungsregler angeordneten Vordruckregler 34 auf 1,2 bar konstant gehalten. Dieser geregelte Vordruck von 1,2 bar wird der Piezo-Pille 30 als Eingangsdruck zugeführt.

Der Ausgangsdruck der Piezo-Pille 30 wird über einen nachgeschalteten pneumatischen Verstärker 36 auf 0-6 bar verstärkt und - wie bereits erwähnt - als Ausgangsdruck y₁ dem Membranantrieb 12 zugeführt.

Der Ausgangsdruck y₁ wird zusätzlich einer Reversierstufe 38 innerhalb des Druckinverters 14 zugeführt. Die Reversierstufe 38 wird ebenfalls über einen Vordruckregler 40 mit einem geregelten Druck von 1,2 bar gespeist. Der Ausgang der Reversierstufe 38 ist auf einen pneumatischen Verstärker 42 geführt, der an seinem Ausgang ein inverses Drucksignal von 6 bis 0 Null bar ausgibt, welches als inverser Ausgangsdruck y₂ dem Membranantrieb 12 zugeführt wird.

Die verwendeten pneumatischen Bauelemente wie Luftfilter, Vordruckregler, pneumatischer Verstärker und Reversierstufe sind alle herkömmlicher Bauart und brauchen daher in ihrem Aufbau nicht näher beschrieben zu werden. Gleiches gilt für die elektrischen Komponenten wie Rückführpotentiometer, Hauptregler und Hilfsregler sowie die Piezo-Pille als E/P-Umformer.

## Patentansprüche

1. Doppeltwirkender elektropneumatischer Stellungsregler für Membran- oder Kolbenantriebe, **gekennzeichnet durch** einen einfach wirkenden E/P-Stellungsregler (10) und einen nachgeschalteten Druckinverter (14).

2. Stellungsregler nach Anspruch 1, **dadurch gekennzeichnet**, daß der Druckinverter (14) eine Reversierstufe (38) mit nachgeschaltetem pneumatischen Verstärker (42) aufweist.

3. Stellungsregler nach Anspruch 1, **dadurch gekennzeichnet**, daß der einfach wirkende E/P-Stellungsregler (10) eine Piezo-Pille (30) als E/P-Umformer aufweist.

4. Stellungsregler nach den Ansprüchen 2 und 3, **dadurch gekennzeichnet**, daß die Piezo-Pille (30) und die Reversierstufe (38) jeweils über getrennte Vordruckregler (34, 40) gespeist werden.
